# EUROPEAN PATENT SPECIFICATION

(11) **EP 3 630 468 B1**
(45) Date of publication and mention of the grant of the patent: **21.07.2021**
(21) Application number: 18724283.9
(22) Date of filing: 22.05.2018
(51) Int. Cl.: B29C 70/54

(54) **A DEVICE AND A METHOD OF ALIGNING CORE ELEMENTS USING SUCH DEVICE**
VORRICHTUNG UND VERFAHREN ZUR AUSRICHTUNG VON KERNELEMENTEN UNTER VERWENDUNG SOLCH EINER VORRICHTUNG
DISPOSITIF ET PROCÉDÉ D'ALIGNEMENT D'ÉLÉMENTS CENTRAUX AU MOYEN D'UN TEL DISPOSITIF

(30) Priority: 22.05.2017 EP 17172198
(43) Date of publication of application: 08.04.2020
(73) Proprietor: LM Wind Power International Technology II ApS, 6000 Kolding (DK)
(72) Inventor: JESPERSEN, Klavs, 6000 Kolding (DK); NIELSEN, Lars, 6000 Kolding (DK)
(74) Representative: COPA Copenhagen Patents
(86) International application number: PCT/EP2018/063357
(87) International publication number: WO 2018/215447

(56) References cited:
- EP-A1- 0 886 016
- EP-A1- 2 524 794
- EP-A2- 2 264 323
- WO-A1-2013/178228
- DE-A1-102009 054 690
- GB-A- 2 153 408
- GB-A- 2 530 072

## Description

### Technical field

The present invention relates to a kit for manufacturing a wind turbine blade component, comprises a first and a second panel section each with recesses arranged in the peripheral edge configured to receive one end of an interlocking device.

The present invention further relates to a method of manufacturing a wind turbine blade, comprising the steps of laying up of layers of a fibre material, then arranging a kit of panel sections as described above on top of these layers, and finally laying up further layers of the fibre material, wherein a resin is afterwards introduced into the fibre material and the core material and then cured.

The present invention also relates to a wind turbine blade manufactured with a kit of panel sections as described above.

### Background

It is well-known that wind turbine blades for modern wind turbines have become larger and heavier in an effort to increase the energy production from the wind turbine. This is achieved by increasing the aerodynamic profile of the wind turbine blades and thus increasing the blade length. Increasing the size of the wind turbine blade also increases the aerodynamic and static loadings on the wind turbine blade.

The wind turbine blade may be manufactured by laying up layers of a laminate of a fibre material in a blade mould, optionally after a gel coating have been applied to the moulding surface. A panel of a core material may be arranged between a first set of layers of fibre material and a second set of layers of fibre material to form a sandwich structure. A resin is then introduced into the fibre material and the core material, and finally cured to form a first blade shell part with a desired aerodynamic profile. The process is then repeated for a second blade shell part. The two cured blade shell parts are joined together via an adhesive. The outer surfaces or only the exposed glue lines of the blade shell may be worked into their finished shape and then coated to form the finished wind turbine blade.

The core panel is made up of a plurality of individual panel sections which are aligned relative to each other. Each panel section comprises a plurality of individual core blocks attached to a flexible fabric or sheet, such as disclosed in US 8470425 B2. A known problem is misalignment of the panel sections resulting in large gaps forming between the panel sections or wrinkles forming in the sandwich structure. This may lead to incorrect placement of the main laminate which, in turn, affects the overall performance and structural properties of the wind turbine blade. This may be solved by applying staples made of metal or plastic to interlock adjacent panel sections. Any steps in thickness between adjacent panel sections have to be grinded into a smooth transition.

DE 102009054690 A1 discloses another way of locking the individual panel sections using interlocking devices. Each panel section comprises a single recess arranged in the peripheral edge for receiving one end of the interlocking device. The interlocking device is forced into the recesses and fills out the entire recess, thereby preventing the panel sections from bending relative to each other. The recess is aligned with an opposite facing recess in an adjacent panel section and the interlocking device is inserted into the aligned recesses. The opposite facing ends of the interlocking device are shaped as dovetails having a semi-circular end profile and sharp well-defined edges along the side surfaces.

The locking device of DE 102009054690 A1 has a local thickness that is greater than the local thickness of the panel sections, thus the opposite facing side surfaces each projects from corresponding side surfaces of the adjacent panel sections. The projecting parts of the locking device are designed to block any transverse resin flow and guide the resin flow along the length of the locking device.

US 2015/0151509 A1 discloses an alternative core panel, wherein a layer of a fibre material is weaved in between individual core bars or strips extending in the longitudinal direction. The layer extends along the upper surface of one bar, through a gap formed between adjacent bars and further along the lower surface an adjacent bar. The layer of fibre material is used to facilitate the resin flow between the upper and lower skins during the resin infusion or injection process. The core panel comprises panel portions of different thicknesses and an intermediate panel portion with a thickness that tapers from one end to the other end.

GB 2153408 A discloses a panel section with a continuous array of projecting interlocking elements, wherein the array engages a matching array of interlocking elements on another panel section. The projecting elements form a tight fit and thus no gaps are formed between the projecting elements and the recesses. The panel sections are thus interlocked by means of compression which prevents any relative movement between the panel sections.

### Object of the invention

An object of the invention is to provide a kit, a method and a wind turbine blade that solve the abovementioned problems.

Another object of the invention is to provide a kit, a method and a wind turbine blade that allow for a simple and easy alignment of the individual panel sections.

Yet another object of the invention is to provide a kit, a method and a wind turbine blade that reduce the risk of resin accumulating in large gaps between the panel sections.

### Detailed description of the invention

One object of the invention is achieved by a kit for manufacturing a wind turbine blade component, comprising:
- a first panel section comprising at least one core element of a core material, the first panel section having a first side surface, an opposite second side surface, a first edge surface and an opposite second edge surface,
- at least a second panel section comprising at least one core element of a core material, the second panel section further having a first side surface, an opposite second side surface, a first edge surface and an opposite second edge surface,
- at least one interlocking device configured to interlock the first and second panel sections relative to each other, the at least interlocking device has a first end, an opposite second end, a third side surface and an opposite fourth side surface,
- wherein at least the first panel section has at least one first recess arranged in at least its first or second edge surface, the at least one first recess is shaped to receive said first end of the at least one interlocking device, characterised in that the at least one interlocking device and at least the first panel section have the same thickness so that, when interlocked, said third and fourth side surfaces are substantially flushed with said first and second side surfaces, and a first gap is formed between an inner edge surface of the at least one first recess and an outer edge surface of the first end of the at least one interlocking device, wherein said first gap has a predetermined maximum width.

This provides an improved panel section kit for manufacturing a wind turbine blade, wherein the individual panel section can be interlocked in a more stable and reliable manner. The present solution provides a simple and easy manner of aligning the respective panel sections during lay-up. Thereby, preventing any large uncontrollable gaps from forming between the panel sections in which resin can accumulate.

Conventional staples have a tendency to move out of engagement, even during minor relative movements of the interlocked panel sections. The panel sections then have to be re-aligned and additional staples have to be inserted. This in turn increases the risk of large gaps forming as well as misalignment of the main laminates of the load carrying structure. Staples moved partly out of engagement may further result in wrinkles or steps forming in the sandwich structure after curing.

A first and a second panel section may be arranged relative to each other so that they abutted each other or form a small gap between the first and second panel sections. Once aligned, the first and second panel sections are connected using a number of interlocking devices arranged between the adjacent panel sections. For example, a single interlocking device may be used to connect the adjacent panel sections. Alternatively, a plurality of interlocking devices may be used to connect the adjacent panel sections. This allows the individual panel sections to be interlocked during the lay-up.

The panel sections and the interlocking devices each have two opposite facing side surfaces for contacting a first number and a second number of layers of a fibre material respectively. Each panel section further has a peripheral edge located between the respective side surfaces extending along the profile of the panel section. For example, each panel section may comprise two first edge surfaces facing in opposite longitudinal directions and further two second edge surfaces facing in opposite facing transverse directions.

The interlocking device and the individual panel sections each has a local thickness measured between the respective side surfaces. The local thickness of the interlocking device may be substantially equal to the local thickness of the first and/or second panel section, thereby forming a substantially flushed continuous side surface. Preferably, the interlocking device and the first and/or second panel section form a continuous upper side surface and a continuous lower side surface. This forms a concealed joint between adjacent panel sections unlike the interlocking device of DE 102009054690 A1. By providing a substantially flushed continuous side surface, the resin in the adjoining upper and/or lower layers of fibre material is able to flow freely along this continuous side surface. This further reduces the risk of steps or wrinkles forming in the fibre material.

The inner dimensions of the recess may be slightly greater than the outer dimensions of the interlocking device to form a gap, thereby forming a relative loose joint. Thereby, a first gap may be formed between the inner edge surface of the recess and the outer edge surface of the interlocking device. This allows the interlocking device and the panel section to better adapt to the contour of the wind turbine blade, e.g. the first layers of fibre material, during the lay-up.

The projecting interlocking device may have a length measured from the peripheral edge of the panel section to a tip point of the first end. The length of the interlocking device may be slightly longer than the depth of the matching recess in the first or second panel section to form a gap. Alternatively, the interlocking device may have a length measured between opposite tip points of the first and second ends. The length of the interlocking device may be slightly longer than the combined depths of two aligned recesses in the first and second panel sections to form a gap. Thereby, a second gap may be formed between a first or second edge surface of the first panel section and an opposite facing first or second edge surface of the second panel section. This further allows the panel sections to adapt to the contour of the wind turbine blade, e.g. the first layers of fibre material, during the lay-up.

According to one embodiment, at least the first end has a cured end profile, e.g. a substantially circular end profile, in a plane parallel to the third or fourth side surface configured to reduce stress concentrations.

The present interlocking device has a peripheral edge extending along the profile of the interlocking device and an outer edge surface arranged between the side surfaces. The interlocking device has at least one end, e.g. a first end and an opposite second end, with a predetermined end profile seen in a plane parallel to the side surfaces. The end is configured to be positioned into a matching recess in the first and/or second panel section. The recess is arranged in the peripheral edge of the respective panel section. The recess in the first and/or second panel section is shaped to substantially follow the profile, e.g. the end profile, of the interlocking device.

The above end profile(s) of the interlocking device may be optimised for reducing stress concentrations to a minimum. The recess profile of the matching recess or recesses in the respective panel section(s) may also be optimised for reducing stress concentrations to a minimum. For example, the interlocking device may have a curved end profile, e.g. a circular or elliptical end profile, thereby providing a smooth end profile. The recess may have a similar curved profile, e.g. a circular or elliptical profile.

The dovetail ends of conventional interlocking devices, such as of DE 102009054690 A1, have an overall triangular end profile formed by a curved or straight end surface arranged between two straight end surfaces. Such a dovetail end design is not optimal in relation to stress concentrations generated in the locking element and in the matching recesses in the panel section. It is known that stress relief undercuts can be machined into the corners formed within the recess of the panel section. Further, the acute-angled corners of the dovetail end can be machining to form rounded corners. However, resin pools may form within the undercuts which in turn may lead to cracks.

According to one embodiment, said gap has a maximum width of 10 millimetres, preferably a maximum width of 5 millimetres.

The first gap and/or the second gap may have a predetermined maximum width measured between the respective edge surfaces. In example, the maximum width may be 10 millimetres, preferably 5 millimetres, or preferably 3 millimetres. Alternatively, the first gap and/or the second gap may have a maximum width greater than 10 millimetres, e.g. 15 millimetres, dependent of the type of resin used to impregnate the fibre material. This allows for minor relative movements between the interlocking device and the panel sections unlike conventional dovetail or butt joints. Conventional dovetail or butt joints is used to force adjacent panel sections together by compression. The dovetail or butt joint is thus placed in a tight engagement with the adjacent panel sections which prevent any relative movement between the panel sections. The dovetail or butt joint is thus more prone to fail or crack during the lay-up of wind turbine blade with a high blade surface curvature due to this tight engagement.

The present invention provides a controlled gap size which, in turn, controls the fatigue strength of the joint. Further, this loose joint enables a controlled relative movement between the individual panel sections, thus allowing them to better adapt to the curvature of the blade surface.

According to one embodiment, the second panel section has at least one second recess arranged in its first or second edge surface, the at least one second recess is shaped to receive said second end of the at least one interlocking device.

The interlocking device may in example be shaped as an insertable element configured to be positioned within matching recesses in adjacent panel sections. For example, the first end of the interlocking device may be positioned in a first recess in the first panel section and the second end of the interlocking device may be positioned in a second recess in the second panel section, or vice versa. The first recess may be aligned with the second recess during the lay-up to enable insertion of the interlocking devices. This provides a simple and easy way of aligning and interlocking the panel sections.

The interlocking devices may be manufactured separately from the panel sections, e.g. using a different manufacturing technique. For example, the panel sections and/or the interlocking devices may be stamped out, cut out or milled using a CNC system. Other manufacturing techniques may be used to manufacture the panel sections and/or the interlocking devices.

According to a special embodiment, said first end and said second end of the at least one interlocking device form a symmetrical or asymmetrical end profile.

The interlocking device may be configured with symmetrical end profiles and thus the aligned recesses may also have symmetrical recess profiles. This allows the interlocking device inserted independent of its orientation. This also allows simplifies the manufacture of the panel sections and of the interlocking devices.

For example, the interlocking device may have an intermediate portion arranged between the first and second ends. The transition area between the intermediate portion and the first and second ends may also have smooth curved profile for further reducing stress concentrations. The first and second ends may have a circular or elliptical end profile. The circular or elliptical ends may be interconnected via a rod-like piece. Alternatively, the interlocking device may have an infinity shaped profile.

The interlocking device may also be configured with asymmetrical end profiles and thus the aligned recesses may also have asymmetrical recess profiles. The interlocking device may then be inserted when orientated correctly. This allows each panel section to be manufactured with a specific recess profile or different recess profiles.

For example, the first edge surfaces may comprise recesses having one unique recess profile and the second edge surfaces may recesses having another unique recess profile. Alternatively, the first and/or second edge surfaces may comprise an alternate pattern of recess profiles.

The kit may comprise two or more sets of panel sections and corresponding interlocking devices, wherein each set of panel sections and interlocking devices may have different thicknesses. For example, one set of panel sections and interlocking devices may have a first thickness; another set of panel sections and interlocking devices may have a second thickness; and so on. For example, one set of interlocking devices may have one outer dimension, e.g. a first radius; another set of interlocking devices may have another outer dimension, e.g. a second radius; and so on. Alternatively or additionally, the locking elements of each set may have different end profiles and thus the panel sections of each set may further have different recess profiles. For example, one set of interlocking devices may have one end profile, another set of interlocking devices may have another end profile, and so on. This reduces the risk of mixing the interlocking devices for different panel thicknesses which otherwise could cause steps or wrinkles in the fibre material.

According to one embodiment, the at least one interlocking device forms an integral part of the first or second panel section, wherein said first end project outwards from the first or second edge surfaces of that panel section.

The interlocking device may form an integrated part of the first and/or second panel section. The first and second end may thus project from the peripheral edge, e.g. the first or second edge surface. In this configuration, the second end may be shaped as a rod-like piece connected to the respective panel section. This allows the panel sections to be directly interlocked, thereby providing a simple and easy way of aligning the individual panel sections.

One or more of the panel sections may be fitted with integrated interlocking devices while other panel sections are fitted with matching recesses. Alternatively, all panel sections may comprise both integrated interlocking devices and matching recesses. The panel sections with integrated interlocking devices may be stamped, cut out or milled using a CNC system. Other manufacturing techniques may be used to manufacture the panel sections with interlocking devices.

According to one embodiment, the at least one interlocking device has at least one tapered portion, wherein the thickness of said at least one tapered portion tapered from one end towards another end.

The kit may comprise one or more sets of adaptive panel sections for adapting to panel sections with different thicknesses. The thickness of this adaptive panel section may taper continuously between the opposite first and/or or second edge surfaces. Alternatively, the adaptive panel section may comprise at least one first tapered portion, wherein the thickness of this first tapered portion tapers from one end to another end. For example, this first tapered portion may be arranged at the peripheral edge, wherein the recesses are partly or fully arranged in this tapered portion. For example, this first tapered portion may be arranged between opposite facing recesses. This allows for a smooth continuous transition between panel sections of different thicknesses.

The kit may further comprise one or more sets of adaptive interlocking devices for adapting to panel sections with different thicknesses. The thickness of this adaptive interlocking device may taper continuously between opposite tip points of the first and second ends. Alternatively, the adaptive interlocking device may comprise at least one tapered portion, wherein the thickness of this tapered portion tapers from one end to another end. For example, said tapered portion may extend partly or fully along the intermediate portion, the first end or the second end. For example, said tapered portion may extend partly along the first or second end and further partly along the intermediate portion.

Optionally, the outer edge surface of the interlocking device may be a tapered edge surface which tapers from the third side surface towards the fourth side surface, or vice versa. The inner edge surface of the recess in the panel section may be a tapered edge surface which tapered from the second side surface towards the first side surface, or vice versa. Alternatively or additionally, the first or second edge surfaces of the panel sections may be a tapered edge surface which tapered from the second side surface towards the first side surface, or vice versa. This allows the panel sections and the interlocking devices to further adapt to the contours of the wind turbine blade. This also allows the first and/or second gaps to have a more uniform width in the spanwise direction.

According to one embodiment, the at least one interlocking device is made of said core material.

The interlocking device and the panel sections are advantageously made of the same core material, such as balsa, foam, reinforced foam, honey comb or other suitable core materials. This allows the kit to have uniform structural properties over the total surface area.

Conventional splines or butt joints are normally made of a harder and stronger material than the material of the adjacent panel sections due to the compression forces. The conventional interlocking devices are thus made of a different material than the panel sections, resulting in the kit having different structural properties over the total surface area.

According to one embodiment, at least one of the first and second panel sections comprises a plurality of core elements arranged relative to each other, wherein said plurality of core elements are attached to a continuous flexible layer defining the third or fourth side surface.

Each panel section may comprise a single continuous core element or a plurality of core elements arranged relative to each other. The individual core elements may be shaped as elongated rods or rectangular blocks. The individual core elements may be attached to a continuous flexible layer or sheet configured to hold the core elements in place relative to each other. The flexible layer or sheet may be made of a fibre material, a thermoplastic material, a veneer material or another suitable material. For example, the fibre material may comprise fibres made of glass, carbon, aramid, basalt or another suitable material. For example, the thermoplastic may be polyester or another suitable thermoplastic material. For example, the veneer material may be wood, e.g. balsa.

The core element may comprise one or more integrated interlocking devices and/or recesses for receiving said integrated or insertable interlocking devices, as described earlier. Alternatively, the core element may comprise both integrated interlocking devices as well as recesses for receiving other integrated interlocking devices.

An object of the invention is also achieved by a method of manufacturing a wind turbine blade component, the method comprises the steps of:
- laying up a first number of layers of a fibre material in a mould, the first number of layers defining an outer side surface of the wind turbine blade,
- arranging a kit of panel sections as described above on top of said first number of layers,
- further laying up a second number of layers of a fibre material on top of said panel sections, the second number of layers defining an inner side surface of the wind turbine blade,
- infusing said fibre material and said panel sections with a first resin,
- substantially curing said first resin to form a sandwich structure of the wind turbine blade component, wherein
- the panel sections of said kit are arranged relative to each other and individually interlocked prior to laying up the second number of layers.

This provides a simple and easy method of aligning the panel sections during the lay-up process, thereby eliminating the need for conventional staples or splines. Once aligned, the panel sections are interlocked via the present interlocking devices. This reduces the total lay-up time and allows for an accurate placement of the main laminate.

The wind turbine blade may comprise two shell parts each manufactured by laying up a first number of layers of a fibre material in a blade mould, optionally after a gel coating have been applied to the moulding surface. The above described kit of panel sections is then laid up and secured to the first number of layers or to the blade mould. Afterwards, a second number of layers of the fibre material is laid up over the panel sections and further along exposed portions of the first number of layers. Resin is then introduced into the fibre material and the core material, and finally cured to form a blade shell part or segment with a desired aerodynamic profile. Additional blade parts or segments may be manufactured in a similar manner. The blade shell parts or segments are finally joined together, e.g. by adhesive, and then worked into their finished shape.

The present configuration enables a controlled relative movement between the locking devices, the matching recesses, and/or the panel sections due to the earlier described loose joint. The first and/or second gaps of this loose joint may have a maximum width of 10 millimetres, preferably 5 millimetres, or preferably 3 millimetres. This reduces the risk of resin accumulating uncontrollably between the panel sections, thereby providing a more uniform distribution of the resin and an improved fatigue strength of the joint.

According to one embodiment, said panel sections are interlocked by inserting a first end of at least one interlocking device projecting from a first panel section into at least one first recess of a second panel section.

The individual panel sections may be aligned in the longitudinal direction and/or in the chordwise direction by means of an integrated interlocking device in one panel section and a matching recess of an adjacent panel section. The integrated interlocking device is inserted into the recess, thereby interlocking the two panel sections. This provides a simple and reliable method of directly interlocking the individual panel sections without the use of separate elements.

According to one embodiment, said panel sections are interlocked by inserting a first end of at least one interlocking device into a first recess of a first panel section and further inserting a second end of said at least one interlocking device into a second recess of the second panel section.

The individual panel sections may be aligned in the longitudinal direction and/or in the chordwise direction by means of a first recess in one panel section and a second recess in an adjacent panel section. An interlocking device is inserted into the first and second recesses, thereby interlocking the two panel sections. This provides a simple and reliable method of interlocking the individual panel sections using separate interlocking devices.

According to one embodiment, the first and second panel sections are interlocked via a plurality of interlocking devices distributed along opposite facing first or second edge surfaces of said first and second panel sections.

The individual panel sections may be interlocked via a single interlocking device arranged between the adjacent panel sections. This reduces the total number of interlocking devices used during the lay-up process. Unlike GB 2153408 A which teaches two continuous arrays of projecting elements that are interlocked by means of compression.

The individual panel sections may also be interlocked via a plurality of interlocking devices distributed between the adjacent panel sections. For example, two, three, four, five or more interlocking devices may be arranged along the first and/or second edge surface of the panel section. This allows for a more stable interconnection which reduces the relative rotational movement in the plane of the individual panel sections. Also, this allows for smaller interlocking devices and thus smaller recesses. This allows the kit of panel sections to adapt to wind turbine blade with greater geometrical variations, particularly at the position of the interlocking devices.

Various reference means may be used to prevent mixing of the interlocking devices during the lay-up. For example, the interlocking devices may be fitted with asymmetrical end profiles used for correct orientation of the interlocking devices during insertion. For example, each set of interlocking devices may be fitted with a unique symmetrical end profiles allowing the worker to identify the correct interlocking device for a particular set of panel sections. For example, each set of interlocking devices may have a unique thickness and/or outer radius allowing the worker to identify the correct interlocking device for a particular set of panel sections. Other reference means, such as visually recognisable reference markings, may be used to orientable the interlocking device correctly and/or differentiate between different sets of interlocking devices.

An object of the invention is further achieved by a wind turbine blade extending from a blade root to a tip end in a longitudinal direction and further from a leading edge to a trailing edge in a chordwise direction, the wind turbine blade comprises at least one blade shell part having an outer side surface and an inner side surface, the at least one blade shell part comprises a sandwich structure having a first number of layers of a fibre material, a kit of panel sections and a second number of layers of a fibre material, characterised in that the kit of panel sections is configured as described above.

Integrating the present kit configuration into the blade shell of a wind turbine blade provides a sandwich structure having a kit of core panels with substantially uniform structural properties. The present interlocking devices allows for a substantially uniform resin distribution over the surface area of the kit of panel sections, thereby reducing the risk of resin accumulating in large uncontrollable gaps and wrinkles occurring in the cured sandwich structure. Further, the panel sections can be interlocked without compression and thus better adapt to the curvature of the moulding surface during lay-up.

The above mentioned wind turbine blade component may be a first and/or blade shell part, or another relevant component of the wind turbine blade, e.g. a shear web or a bulkhead.

### Description of drawings

The invention is explained in detail below with reference to embodiments shown in the drawings, in which
- Fig. 1: shows a wind turbine,
- Fig. 2: shows an exemplary embodiment of the wind turbine blade,
- Fig. 3: shows an exemplary embodiment of a kit of panel sections of the wind turbine blade,
- Fig. 4: shows a first embodiment of the interlocking device,
- Fig. 5: shows a second embodiment of the interlocking device,
- Fig. 6: shows a first embodiment of an adaptive panel section,
- Fig. 7: shows a second embodiment of the adaptive panel section,
- Fig. 8: shows a third embodiment of the adaptive panel section,
- Fig. 9: shows a first embodiment of an adaptive interlocking device,
- Fig. 10: shows a second embodiment of the adaptive interlocking device,
- Fig. 11: shows a third embodiment of the adaptive interlocking device,
- Fig. 12: shows the interlocking device with asymmetrical end profiles,
- Fig. 13: shows the interlocking device with a curved end profile, and
- Fig. 14: shows an exemplary embodiment of the panel section with a plurality of core elements arranged on a flexible layer.

### List of references

- 1.: Wind turbine
- 2.: Wind turbine tower
- 3.: Nacelle
- 4.: Hub
- 5.: Wind turbine blades
- 6.: Pitch bearing
- 7.: Blade root
- 8.: Tip end
- 9.: Leading edge
- 10.: Trailing edge
- 11.: Blade shell
- 12.: Pressure side
- 13.: Suction side
- 14.: Blade root portion
- 15.: Aerodynamic blade portion
- 16.: Transition portion
- 17.: Length of wind turbine blade
- 18.: Chord length of wind turbine blade
- 19.: Kit
- 20.: Panel sections
- 20a.: First panel section
- 20b.: Second panel section
- 21.: First number of layers
- 22.: Interlocking devices
- 23.: Recesses
- 23a.: First recess
- 23b.: Second recess
- 24.: Second number of layers
- 25.: Resin flow network
- 26.: Second side surface
- 27.: First edge surface
- 28.: Second edge surface
- 29.: Third side surface
- 30.: Outer edge surface
- 31.: First end
- 32.: Second end
- 33.: Intermediate portion
- 34.: First gap
- 35.: Inner edge surface
- 36.: Second gap
- 37.: Adaptive panel section
- 38.: Frist side surface
- 39.: Adaptive interlocking device
- 40.: Third side surface
- 41.: Core elements
- 42.: Flexible layer

The listed reference numbers are shown in abovementioned drawings where no all reference numbers are shown on the same figure for illustrative purposes. The same part or position seen in the drawings will be numbered with the same reference number in different figures.

### Detailed description of the drawings

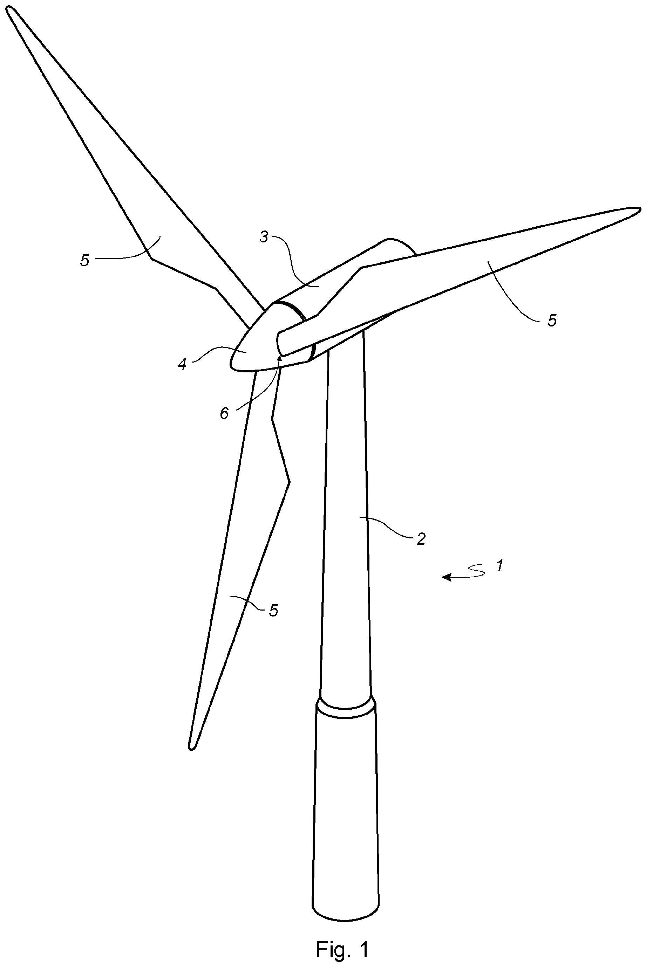

Fig. 1 shows a modern wind turbine 1 comprising a wind turbine tower 2, a nacelle 3 arranged on top of the wind turbine tower 2, and a rotor defining a rotor plane. The nacelle 3 is connected to the wind turbine tower 2, e.g. via a yaw bearing unit. The rotor comprises a hub 4 and a number of wind turbine blades 5. Here three wind turbine blades are shown, but the rotor may comprise more or fewer wind turbine blades 5. The hub 4 is connected to a drive train, e.g. a generator, located in the wind turbine 1 via a rotation shaft.

The hub 4 comprises a mounting interface for each wind turbine blade 5. A pitch bearing unit 6 is optionally connected to this mounting interface and further to a blade root of the wind turbine blade 5.

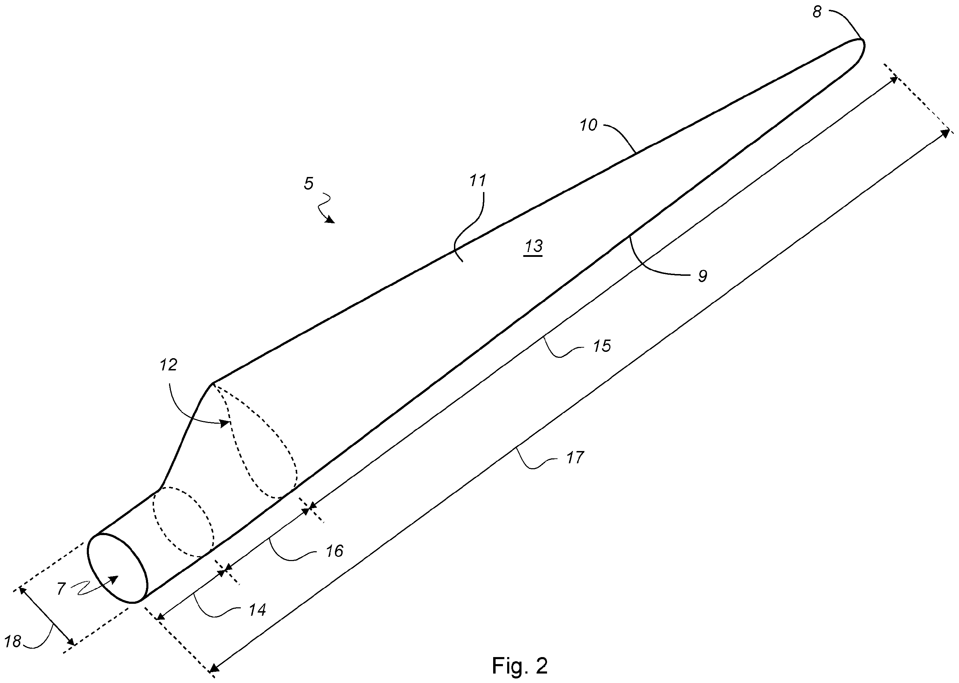

Fig. 2 shows a schematic view of the wind turbine blade 5 which extends in a longitudinal direction from a blade root 7 to a tip end 8. The wind turbine blade 5 further extends in a chordwise direction from a leading edge 9 to a trailing edge 10. The wind turbine blade 5 comprises a blade shell 11 having two opposite facing side surfaces defining a pressure side 12 and a suction side 13 respectively. The blade shell 11 further defines a blade root portion 14, an aerodynamic blade portion 15, and a transition portion 16 between the blade root portion 14 and the aerodynamic blade portion 15.

The blade root portion 14 has a substantially circular or elliptical cross-section (indicated by dashed lines). The blade root portion 14 together with a load carrying structure, e.g. a main laminate combined with a shear web or a box beam, are configured to add structural strength to the wind turbine blade 5 and transfer the dynamic loads to the hub 4. The load carrying structure extends between the pressure side 12 and the suction side 13 and further in the longitudinal direction.

The blade aerodynamic blade portion 15 has an aerodynamically shaped cross-section (indicated by dashed lines) designed to generate lift. The cross-sectional profile of the blade shell 11 gradually transforms from the circular or elliptical profile into the aerodynamic profile in the transition portion 16.

The wind turbine blade 5 has a longitudinal length 17 of at least 35 metres, preferably at least 50 metres. The wind turbine blade 5 further has a chord length 18 as function of the length 17, wherein the maximum chord length is found between the blade aerodynamic blade portion 15 and the transition portion 16. The wind turbine blade 5 further has a blade thickness 19 as function of the chord length 18, wherein the blade thickness 19 is measured between the pressure side 12 and the suction side 13.

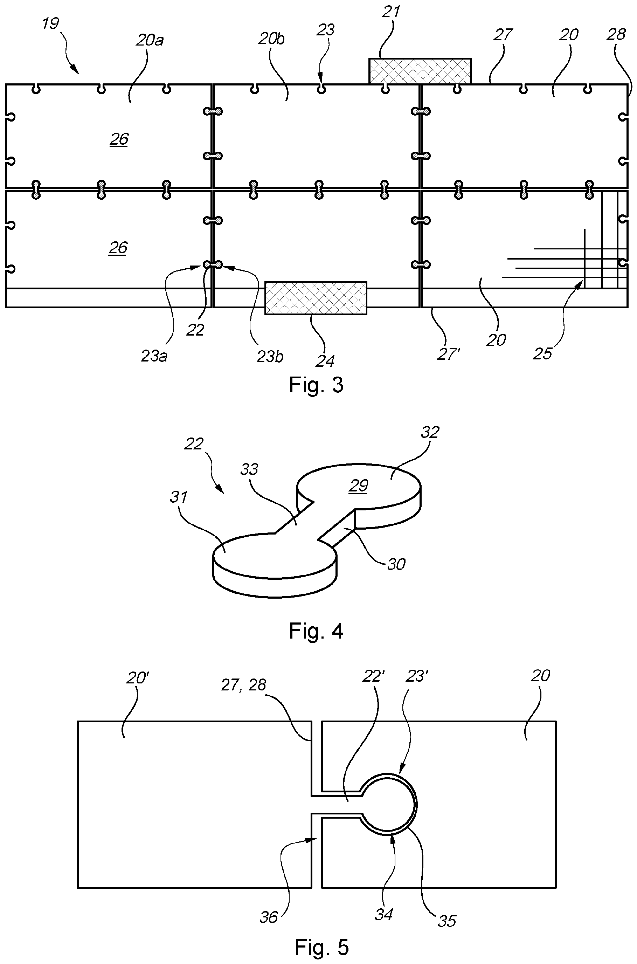

Fig. 3 shows an exemplary embodiment of a kit 19 of individual panel sections 20 made of a core material, e.g. foam or balsa wood. During manufacture of the wind turbine blade 5, a first number of layers 21 of a fibre material are arranged on a moulding surface of a blade mould. The kit 19 of panel sections 20 are then arranged on top of the layers 21 and secured using a number of interlocking devices 22.

Here, the panel sections 20 comprise a number of recesses 23 configured to receive one end of the respective interlocking device 22. Adjacent panel sections 20 are aligned by aligning a first recess 23a of a first panel section 20a with a second recess 23b of a second panel section 20b. An interlocking device 22 is afterwards inserted into the aligned first and second recesses 23a, 23b, thereby securing the first and second panel sections 20a, 20b relative to each other.

After completing the lay-up of the kit 19 of panel sections 20, a second number of layers 24 of the fibre material are arranged on top of the panel sections 20. Resin in then introducing into the layers 21, 24 of fibre material and the core material of the panel sections 20. The panel sections 20 comprise an optional resin flow network 25 in the form of an arrangement of grooves extending in the longitudinal direction and/or in the chordwise direction, as indicated in fig. 3.

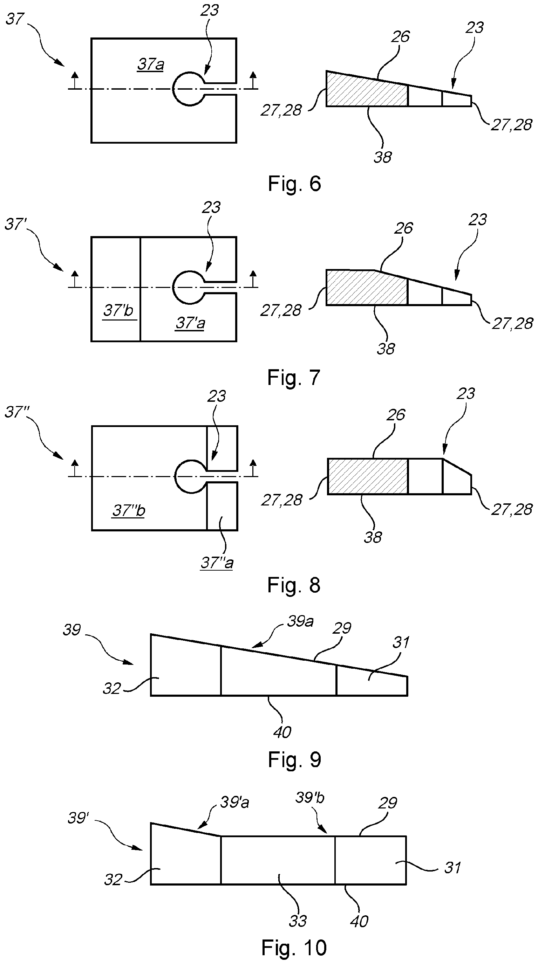

Each panel section 20 has a first side surface (shown in figs. 6-8) facing the layers 21 and a second side surface 26 facing the layers 24. Each panel section 20 further has a peripheral edge which defines a first edge surface 27 facing in the chordwise direction and a second edge surface 28 facing in the longitudinal direction. A plurality of recesses 23 are distributed along the first edge surface 27 and/or the second edge surface 28, thereby allowing a plurality of interlocking devices 22 to be arranged between the first and second panel sections 20a, 20b, as indicated in fig. 3. Here, the recesses 23 are omitted from the first edge surface 27' facing a main laminate (not shown) of the wind turbine blade 5, thereby forming a continuous edge surface.

Fig. 4 shows a first embodiment of the interlocking device 22 used in the kit shown in fig. 1. The interlocking device 22 has a third side surface (shown in figs. 9-11) facing the layers 21 and a fourth side surface 29 facing the layers 24. The interlocking device 22 further has a peripheral edge defining an outer edge surface 30. The profile of the interlocking device 22 defines a first end 31, a second end 32 and an intermediate portion 33.

The thickness of the interlocking devices 22 is equal to the thickness of the panel sections 20 so that the first and third side surfaces and the second and fourth side surfaces 26, 29 are flushed to form two continuous side surfaces.

Fig. 5 shows a second embodiment of the interlocking device 22', wherein the interlocking device 22' form an integrated part of the panel section 20'. In this configuration, the interlocking devices 22' projects from the first or second edge surfaces 27, 28 and has one free end, as indicated in fig. 5.

A first gap 34 is formed between an inner edge surface 35 of the recess 23, 23' and the outer edge surface 30 of the interlocking device 22, 22'. A second gap 36 is formed between opposite facing first or second edge surfaces 27, 28 of the first and second panel sections 20a, 20b. The first gap 34 and, optionally, the second gap 36 have a maximum width of 5 millimetres, preferably a maximum width of 3 millimetres.

Figs. 6-8 show different embodiments of an adaptive panel section 37 for arrangement between panel sections 20 of different thicknesses. Optionally, two adaptive panel sections 37 may be arranged between the first and second panel sections 20a, 20b.

The adaptive panel section 37 may have single continuous tapered portion 37a extending between opposite first or second edge surfaces 27, 28, as indicated in fig. 6. The adaptive panel section 37' may alternatively have a tapered portion 37'a and a non-tapered portion 37'b, as indicated in fig. 7. The recess 23 may extend fully in this tapered portion 37'a, as indicated in fig. 7, or in the non-tapered portion 37'b, as indicated in fig. 1. Alternatively, the recess 23 may further extend partly into the non-tapered portion 37"b, as indicated in fig. 8.

The tapered portion 37a, 37'a, 37"a has a thickness measured between the first and second side surfaces 26, 38 which tapers from one end towards another end, as indicated in figs. 6-8. Panel sections 20 of different thicknesses may thus be placed adjacent to the opposite ends of this adaptive panel section 37.

Figs. 9-11 show different embodiments of an adaptive interlocking device 39 for arrangement between a panel section 20 of a predetermined thickness and the adaptive panel section 37. Optionally, the adaptive interlocking device 39 may be arranged between two adaptive panel sections 37.

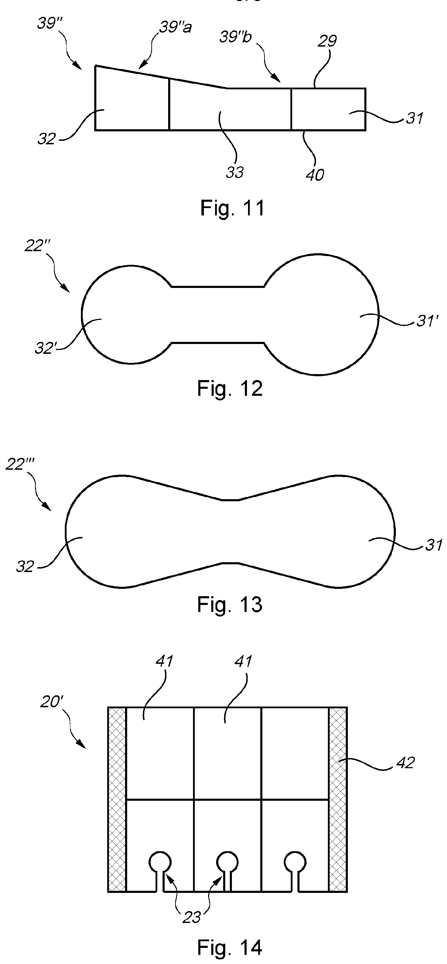

The adaptive interlocking device 39 may have a single continuous tapered portion 39a extending between opposite tip ends of the first and second ends 31, 32, as indicated in fig. 9. The adaptive interlocking device 39' may alternatively have a tapered portion 39'a and a non-tapered portion 39'b, as indicated in fig. 10. The tapered portion 39'a may be equal to the first or second end 31, 32 or the intermediate portion 33. Alternatively, the tapered portion 39"a may extend further partly into the intermediate portion 33, as indicated in fig. 11.

The tapered portion 39a, 39'a, 39"a has a thickness measured between the first and second side surfaces 29, 40 which tapers from one end towards another end, as indicated in figs. 9-11. Preferably, the thickness of the tapered portion 39a, 39'a, 39"a are equal to the thickness of the tapered portion 37a, 37'a, 37"a of the adaptive panel section 37, 37', 37". Further preferably, the thickness of the non-tapered portion 39'b, 39"b are equal to the thickness of panel section 20 or of the non-tapered portion 37'b, 37"b of the adaptive panel section 37', 37".

Fig. 12 shows the interlocking device 22" with asymmetrical end profiles, wherein the end profile of the first end 31' differ from the end profile of the second end 32'. The first end 31' may differ from the second end 32' by simply having larger outer dimensions, as indicated in fig. 12. Alternatively, the first and second ends 31', 32' may have different end profiles.

Fig. 13 shows the interlocking device 22'" with a curved end profile shaped to reduce stress concentrations in the interlocking device 22''' into a minimum. The interlocking device 22''' may have infinity shaped profile, as indicated in fig. 13, or circular shaped end profiles, as indicated in figs. 2 and 12.

Fig. 14 shows an exemplary embodiment of the panel section 20' comprising a plurality of core elements 41 attached to a flexible layer 42 defining the first side surface 38. The individual core elements are arranged relative to each other to form the panel section 20'. Here, the core elements 41 are shaped as core blocks, however, the core elements may also be shaped as elongated rod-like elements.

The flexible layer 42 is configured to hold the core elements 41 in place and allows the core elements to adapt to the contours of the wind turbine blade 5 during lay-up. The recesses 23 are arranged in at least the outermost row of core elements 41 defining the peripheral edge of the panel section 20', as indicated in figs. 1 and 14.

The abovementioned embodiments may be combined in any combinations provided that they fall within the scope of the appended claims.

## Claims

1. A kit for manufacturing a wind turbine blade component, comprising:
- a first panel section (20a) comprising at least one core element (41) of a core material, the first panel section (20a) having a first side surface (38), an opposite second side surface (26), a first edge surface (27) and an opposite second edge surface (28),
- at least a second panel section (20b) comprising at least one core element (41) of a core material, the second panel section (20b) further having a first side surface (38), an opposite second side surface (26), a first edge surface (27) and an opposite second edge surface (28),
- at least one interlocking device (22, 37, 39) configured to interlock the first and second panel sections (20a, 20b) relative to each other, the at least interlocking device (22) has a first end (31), an opposite second end (32), a third side surface (40) and an opposite fourth side surface (29),
- wherein at least the first panel section (20a) has at least one first recess (23a) arranged in at least its first or second edge surface (27, 28), the at least one first recess (23a) is shaped to receive said first end (31) of the at least one interlocking device (22),
wherein the at least one interlocking device (22) and at least the first panel section (20a) have the same thickness so that, when interlocked, said third and fourth side surfaces (29, 40) are substantially flushed with said first and second side surfaces (26, 38), and a first gap (34) is formed between an inner edge surface (35) of the at least one first recess (23a) and an outer edge surface (30) of the first end (31) of the at least one interlocking device (22), wherein said first gap (34) has a predetermined maximum width.

2. A kit according to claim 1, **characterised in that** at least the first end (31) has a cured end profile, e.g. a substantially circular end profile, in a plane parallel to the third or fourth side surface (29, 40) configured to reduce stress concentrations.

3. A kit according to claim 1 or 2, **characterised in that** said first gap (34) has a maximum width of 10 millimetres, preferably a maximum width of 5 millimetres.

4. A kit according to any one of claims 1 to 3, **characterised in that** the second panel section (20b) has at least one second recess (23b) arranged in its first or second edge surface (27, 28), the at least one second recess (23b) is shaped to receive said second end (32) of the at least one interlocking device (22).

5. A kit according to claim 4, **characterised in that** said first end (31) and said second end (32) of the at least one interlocking device (22) form a symmetrical or asymmetrical end profile.

6. A kit according to any one of claims 1 to 3, **characterised in that** the at least one interlocking device (22') forms an integral part of the first or second panel section (20a, 20b), wherein said first end (31') project outwards from the first or second edge surfaces (27, 28) of that panel section.

7. A kit according to any one of claims 1 to 6, **characterised in that** the at least one interlocking device (37, 39) has at least one tapered portion (37a, 39a), wherein the thickness of said at least one tapered portion (37a, 39a) tapered from one end towards another end.

8. A kit according to any one of claims 1 to 7, **characterised in that** the at least one interlocking device (22, 37, 39) is made of said core material.

9. A kit according to any one of claims 1 to 7, **characterised in that** at least one of the first and second panel sections (20a. 20b) comprises a plurality of core elements (41) arranged relative to each other, wherein said plurality of core elements (41) are attached to a continuous flexible layer (42) defining the third or fourth side surface (29, 40).

10. A method of manufacturing a wind turbine blade component, the method comprises the steps of:
- laying up a first number of layers (21) of a fibre material in a mould, the first number of layers (21) defining an outer side surface of the wind turbine blade (5),
- arranging a kit (19) of panel sections (20) according to any one of claims 1 to 9 on top of said first number of layers (21),
- further laying up a second number of layers (24) of a fibre material on top of said panel sections (20), the second number of layers (24) defining an inner side surface of the wind turbine blade (5),
- infusing said fibre material and said panel sections (20) with a first resin,
- substantially curing said first resin to form a sandwich structure of the wind turbine blade component, wherein
- the panel sections (20) of said kit (19) are arranged relative to each other and individually interlocked prior to laying up the second number of layers (24).

11. A method according to claim 10, **characterised in that** said panel sections (20) are interlocked by inserting a first end (31) of at least one interlocking device (22) projecting from a first panel section (20a) into at least one first recess (23a) of a second panel section (20b).

12. A method according to claim 10, **characterised in that** said panel sections (20) are interlocked by inserting a first end (31) of at least one interlocking device (22) into a first recess (23a) of a first panel section (20a) and further inserting a second end (32) of said at least one interlocking device (32) into a second recess (23b) of the second panel section (20b).

13. A method according to claim 11 or 12, **characterised in that** the first and second panel sections (20a, 20b) are interlocked via a plurality of interlocking devices (22) distributed along opposite facing first or second edge surfaces (27, 28) of said first and second panel sections (20a, 20b).

14. A wind turbine blade (5) extending from a blade root (7) to a tip end (8) in a longitudinal direction and further from a leading edge (9) to a trailing edge (10) in a chordwise direction, the wind turbine blade (5) comprises at least one blade shell (11) part having an outer side surface and an inner side surface, the at least one blade shell (11) part comprises a sandwich structure having a first number of layers (21) of a fibre material, a kit (19) of panel sections (20) and a second number of layers (24) of a fibre material, **characterised in that** the kit (19) of panel sections (20) is configured according to any one of claims 1 to 9.

## Patentansprüche

1. Kit zum Herstellen einer Windkraftanlagenflügelkomponente, der Folgendes umfasst:
- einen ersten Plattenabschnitt (20a), der mindestens ein Kernelement (41) aus einem Kernmaterial umfasst, wobei der erste Plattenabschnitt (20a) eine erste Seitenoberfläche (38), eine gegenüberliegende zweite Seitenoberfläche (26), eine erste Kantenoberfläche (27) und eine gegenüberliegende zweite Kantenoberfläche (28) aufweist,
- mindestens einen zweiten Plattenabschnitt (20b), der mindestens ein Kernelement (41) aus einem Kernmaterial umfasst, wobei der zweite Plattenabschnitt (20b) ferner eine erste Seitenoberfläche (38), eine gegenüberliegende zweite Seitenoberfläche (26), eine erste Kantenoberfläche (27) und eine gegenüberliegende zweite Kantenoberfläche (28) aufweist,
- mindestens eine Verriegelungsvorrichtung (22, 37, 39), die dazu konfiguriert ist, den ersten und den zweiten Plattenabschnitt (20a, 20b) relativ zueinander zu verriegeln, wobei die mindestens eine Verriegelungsvorrichtung (22) ein erstes Ende (31), ein gegenüberliegendes zweites Ende (32), eine dritte Seitenoberfläche (40) und eine gegenüberliegende vierte Seitenoberfläche (29) aufweist,
- wobei mindestens der erste Plattenabschnitt (20a) mindestens eine erste Aussparung (23a) aufweist, die in mindestens seiner ersten oder seiner zweiten Kantenoberfläche (27, 28) angeordnet ist, wobei die mindestens eine Aussparung (23a) gestaltet ist, um das erste Ende (31) der mindestens einen Verriegelungsvorrichtung (22) aufzunehmen,
wobei die mindestens eine Verriegelungsvorrichtung (22) und mindestens der erste Plattenabschnitt (20a) die gleiche Dicke aufweisen, sodass, wenn sie verriegelt sind, die dritte und die vierte Seitenoberfläche (29, 40) mit der ersten und der zweiten Seitenoberfläche (26, 38) im Wesentlichen bündig sind, und ein erster Spalt (34) zwischen einer inneren Kantenoberfläche (35) der mindestens einen ersten Aussparung (23a) und einer äußeren Kantenoberfläche (30) des ersten Endes (31) der mindestens einen Verriegelungsvorrichtung (22) gebildet ist, wobei der erste Spalt (34) eine vorgegebene maximale Breite aufweist.

2. Kit nach Anspruch 1, **dadurch gekennzeichnet, dass** mindestens das erste Ende (31) in einer zu der dritten oder der vierten Seitenoberfläche (29, 40) parallelen Ebene ein ausgehärtetes Endprofil aufweist, z. B. ein im Wesentlichen kreisförmiges Endprofil, das dazu konfiguriert ist, Spannungskonzentrationen zu verringern.

3. Kit nach Anspruch 1 oder 2, **dadurch gekennzeichnet, dass** der erste Spalt (34) eine maximale Breite von 10 Millimetern, vorzugsweise eine maximale Breite von 5 Millimetern aufweist.

4. Kit nach einem der Ansprüche 1 bis 3, **dadurch gekennzeichnet, dass** der zweite Plattenabschnitt (20b) mindestens eine zweite Aussparung (23b) aufweist, die in seiner ersten oder seiner zweiten Kantenoberfläche (27, 28) angeordnet ist, wobei die mindestens eine zweite Aussparung (23b) gestaltet ist, um das zweite Ende (32) der mindestens einen Verriegelungsvorrichtung (22) aufzunehmen.

5. Kit nach Anspruch 4, **dadurch gekennzeichnet, dass** das erste Ende (31) und das zweite Ende (32) der mindestens einen Verriegelungsvorrichtung (22) ein symmetrisches oder ein asymmetrisches Endprofil bilden.

6. Kit nach einem der Ansprüche 1 bis 3, **dadurch gekennzeichnet, dass** die mindestens eine Verriegelungsvorrichtung (22') einen integrierten Teil des ersten oder des zweiten Plattenabschnitts (20a, 20b) bildet, wobei das erste Ende (31') von der ersten oder der zweiten Kantenoberfläche (27, 28) dieses Plattenabschnitts nach außen vorsteht.

7. Kit nach einem der Ansprüche 1 bis 6, **dadurch gekennzeichnet, dass** die mindestens eine Verriegelungsvorrichtung (37, 39) mindestens einen abgeschrägten Abschnitt (37a, 39a) aufweist, wobei die Dicke des mindestens einen abgeschrägten Abschnitts (37a, 39a) von einem Ende in Richtung eines anderen Endes abnimmt.

8. Kit nach einem der Ansprüche 1 bis 7, **dadurch gekennzeichnet, dass** die mindestens eine Verriegelungsvorrichtung (22, 37, 39) aus dem Kernmaterial gefertigt ist.

9. Kit nach einem der Ansprüche 1 bis 7, **dadurch gekennzeichnet, dass** der erste und/oder der zweite Plattenabschnitt (20a, 20b) eine Vielzahl von Kernelementen (41) umfasst, die relativ zu einander angeordnet sind, wobei die Vielzahl von Kernelementen (41) an einer durchgehenden biegsamen Schicht (42) angebracht sind, die die dritte oder die vierte Seitenoberfläche (29, 40) definiert.

10. Verfahren zum Herstellen einer Windkraftanlagenflügelkomponente, wobei das Verfahren folgende Schritte umfasst:
- Schichten einer ersten Anzahl von Schichten (21) eines Fasermaterials in einer Form, wobei die erste Anzahl von Schichten (21) eine Außenseitenoberfläche des Windkraftanlagenflügels (5) definiert,
- Anordnen eines Kits (19) aus Plattenabschnitten (20) nach einem der Ansprüche 1 bis 9 auf der ersten Anzahl von Schichten (21),
- weiteres Schichten einer zweiten Anzahl von Schichten (24) eines Fasermaterials auf den Plattenabschnitten (20), wobei die zweite Anzahl von Schichten (24) eine Innenseitenoberfläche des Windkraftanlagenflügels (5) definiert,
- Tränken des Fasermaterials und der Plattenabschnitte (20) mit einem ersten Harz,
- im Wesentlichen Aushärten des ersten Harzes, um eine Sandwichstruktur der Windkraftanlagenflügelkomponente zu bilden,
- wobei die Plattenabschnitte (20) des Kits (19) vor dem Schichten der zweiten Anzahl von Schichten (24) relativ zueinander angeordnet und einzeln verriegelt werden.

11. Verfahren nach Anspruch 10, **dadurch gekennzeichnet, dass** die Plattenabschnitte (20) verriegelt werden, indem ein von einem ersten Plattenabschnitt (20a) vorstehendes erstes Ende (31) mindestens einer Verriegelungsvorrichtung (22) in mindestens eine erste Aussparung (23a) eines zweiten Plattenabschnitts (20b) gesteckt wird.

12. Verfahren nach Anspruch 10, **dadurch gekennzeichnet, dass** die Plattenabschnitte (20) verriegelt werden, indem ein erstes Ende (31) mindestens einer Verriegelungsvorrichtung (22) in eine erste Aussparung (23a) eines ersten Plattenabschnitts (20a) gesteckt wird und ferner ein zweites Ende (32) der mindestens einen Verriegelungsvorrichtung (32) in eine zweite Aussparung (23b) des zweiten Plattenabschnitts (20b) gesteckt wird.

13. Verfahren nach Anspruch 11 oder 12, **dadurch gekennzeichnet, dass** der erste und der zweite Plattenabschnitt (20a, 20b) mittels einer Vielzahl von Verriegelungsvorrichtungen (22) verriegelt werden, die entlang entgegengesetzt weisender erster oder zweiter Kantenoberflächen (27, 28) des ersten und des zweiten Plattenabschnitts (20a, 20b) verteilt sind.

14. Windkraftanlagenflügel (5), der sich von einer Flügelwurzel (7) zu einem Spitzenende (8) in einer Längsrichtung und ferner von einer Eintrittskante (9) zu einer Austrittskante (10) in einer Sehnenrichtung erstreckt, wobei der Windkraftanlagenflügel (5) mindestens einen Teil einer Flügelschale (11) umfasst, der eine Außenseitenoberfläche und eine Innenseitenoberfläche aufweist, wobei der mindestens eine Teil der Flügelschale (11) eine Sandwichstruktur mit einer ersten Anzahl von Schichten (21) eines Fasermaterials, einen Kit (19) aus Plattenabschnitten (20) und eine zweite Anzahl von Schichten (24) eines Fasermaterials umfasst, **dadurch gekennzeichnet, dass** der Kit (19) aus Plattenabschnitten (20) gemäß einem der Ansprüche 1 bis 9 konfiguriert ist.

## Revendications

1. Kit de fabrication d'un composant de pale d'éolienne, comportant :
- une première section de panneau (20a) comportant au moins un élément d'âme (41) d'un matériau d'âme, la première section de panneau (20a) ayant une première surface latérale (38), une deuxième surface latérale opposée (26), une première surface de bord (27) et une deuxième surface de bord opposée (28),
- au moins une deuxième section de panneau (20b) comportant au moins un élément d'âme (41) d'un matériau d'âme, la deuxième section de panneau (20b) ayant par ailleurs une première surface latérale (38), une deuxième surface latérale opposée (26), une première surface de bord (27) et une deuxième surface de bord opposée (28),
- au moins un dispositif d'interverrouillage (22, 37, 39) configuré pour verrouiller mutuellement les première et deuxième sections de panneau (20a, 20b) l'une par rapport à l'autre, ledit au moins un dispositif d'interverrouillage (22) a une première extrémité (31), une deuxième extrémité opposée (32), une troisième surface latérale (40) et une quatrième surface latérale opposée (29),
- dans lequel au moins la première section de panneau (20a) a au moins un premier évidement (23a) agencé dans au moins sa première ou deuxième surface de bord (27, 28), ledit au moins un premier évidement (23a) est façonné pour recevoir ladite première extrémité (31) dudit au moins un dispositif d'interverrouillage (22), dans lequel ledit au moins un dispositif d'interverrouillage (22) et au moins la première section de panneau (20a) ont la même épaisseur de telle sorte que, en cas d'interverrouillage, lesdites troisième et quatrième surfaces latérales (29, 40) sont sensiblement de niveau par rapport auxdites première et deuxième surfaces latérales (26, 38), et un premier interstice (34) est formé entre une surface de bord intérieure (35) dudit au moins un premier évidement (23a) et une surface de bord extérieure (30) de la première extrémité (31) dudit au moins un dispositif d'interverrouillage (22), dans lequel ledit premier interstice (34) a une largeur maximum prédéterminée.

2. Kit selon la revendication 1, **caractérisé en ce qu'**au moins la première extrémité (31) a un profil d'extrémité durci, par exemple un profil d'extrémité sensiblement circulaire, dans un plan parallèle par rapport à la troisième ou quatrième surface latérale (29, 40) dont la configuration permet de réduire les concentrations de contraintes.

3. Kit selon la revendication 1 ou la revendication 2, **caractérisé en ce que** ledit premier interstice (34) a une largeur maximum de 10 millimètres, de préférence une largeur maximum de 5 millimètres.

4. Kit selon l'une quelconque des revendications 1 à 3, **caractérisé en ce que** la deuxième section de panneau (20b) a au moins un deuxième évidement (23b) agencé dans sa première ou deuxième surface de bord (27, 28), ledit au moins un deuxième évidement (23b) est façonné pour recevoir ladite deuxième extrémité (32) dudit au moins un dispositif d'interverrouillage (22).

5. Kit selon la revendication 4, **caractérisé en ce que** ladite première extrémité (31) et ladite deuxième extrémité (32) dudit au moins un dispositif d'interverrouillage (22) forment un profil d'extrémité symétrique ou asymétrique.

6. Kit selon l'une quelconque des revendications 1 à 3, **caractérisé en ce que** ledit au moins un dispositif d'interverrouillage (22') est formé d'une seule pièce avec la première ou deuxième section de panneau (20a, 20b), dans lequel ladite première extrémité (31') fait saillie vers l'extérieur depuis les première ou deuxième surfaces de bord (27, 28) de cette section de panneau.

7. Kit selon l'une quelconque des revendications 1 à 6, **caractérisé en ce que** ledit au moins un dispositif d'interverrouillage (37, 39) a au moins une partie conique (37a, 39a), dans lequel l'épaisseur de ladite au moins une partie conique (37a, 39a) va en s'effilant depuis une extrémité vers une autre extrémité.

8. Kit selon l'une quelconque des revendications 1 à 7, **caractérisé en ce que** ledit au moins un dispositif d'interverrouillage (22, 37, 39) est réalisé à partir dudit matériau d'âme.

9. Kit selon l'une quelconque des revendications 1 à 7, **caractérisé en ce qu'**au moins l'une des première et deuxième sections de panneau (20a, 20b) comporte une pluralité d'éléments d'âme (41) agencés les uns par rapport aux autres, dans lequel les éléments d'âme de ladite pluralité d'éléments d'âme (41) sont attachés sur une couche flexible continue (42) définissant la troisième ou quatrième surface latérale (29, 40).

10. Procédé de fabrication d'un composant de pale d'éolienne, le procédé comportant les étapes consistant à :
- superposer un premier nombre de couches (21) d'une matière fibreuse dans un moule, le premier nombre de couches (21) définissant une surface latérale extérieure de la pale d'éolienne (5),
- agencer un kit (19) de sections de panneau (20) selon l'une quelconque des revendications 1 à 9 sur ledit premier nombre de couches (21),
- par ailleurs superposer un deuxième nombre de couches (24) d'une matière fibreuse sur lesdites sections de panneau (20), le deuxième nombre de couches (24) définissant une surface latérale intérieure de la pale d'éolienne (5),
- infuser ladite matière fibreuse et lesdites sections de panneau (20) au moyen d'une première résine,
- faire sensiblement durcir ladite première résine pour former une structure en sandwich du composant de pale d'éolienne, dans lequel
- les sections de panneau (20) dudit kit (19) sont agencées les unes par rapport aux autres et verrouillées mutuellement de manière individuelle avant la superposition du deuxième nombre de couches (24).

11. Procédé selon la revendication 10, **caractérisé en ce que** lesdites sections de panneau (20) sont verrouillées mutuellement en insérant une première extrémité (31) d'au moins un dispositif d'interverrouillage (22) faisant saillie en provenance d'une première section de panneau (20a) jusque dans au moins un premier évidement (23a) d'une deuxième section de panneau (20b).

12. Procédé selon la revendication 10, **caractérisé en ce que** lesdites sections de panneau (20) sont verrouillées mutuellement en insérant une première extrémité (31) d'au moins un dispositif d'interverrouillage (22) jusque dans un premier évidement (23a) d'une première section de panneau (20a) et par ailleurs en insérant une deuxième extrémité (32) dudit au moins un dispositif d'interverrouillage (32) jusque dans un deuxième évidement (23b) de la deuxième section de panneau (20b).

13. Procédé selon la revendication 11 ou la revendication 12, **caractérisé en ce que** les première et deuxième sections de panneau (20a, 20b) sont verrouillées mutuellement par le biais d'une pluralité de dispositifs d'interverrouillage (22) répartis le long des première ou deuxième surfaces de bord orientées de manière opposée (27, 28) desdites première et deuxième sections de panneau (20a, 20b).

14. Pale d'éolienne (5) s'étendant depuis une extrémité de pied (7) jusqu'à une extrémité de bout (8) de pale dans une direction longitudinale et par ailleurs depuis un bord d'attaque (9) jusqu'à un bord de fuite (10) dans une direction allant dans le sens de la corde, la pale d'éolienne (5) comporte au moins une partie formant coque de pale (11) ayant une surface latérale extérieure et une surface latérale intérieure, ladite au moins une partie formant coque de pale (11) comporte une structure en sandwich ayant un premier nombre de couches (21) d'une matière fibreuse, un kit (19) de sections de panneau (20) et un deuxième nombre de couches (24) d'une matière fibreuse, **caractérisée en ce que** le kit (19) de sections de panneau (20) est configuré selon l'une quelconque des revendications 1 à 9.
